Europäisches Patentamt

European Patent Office

Office européen des brevets

(11) Publication number: **0 415 515 A2**

# EUROPEAN PATENT APPLICATION

(21) Application number: **90303714.1**

(51) Int. Cl.⁵: **G06F 9/46**

(22) Date of filing: **06.04.90**

(30) Priority: **01.09.89 US 401750**

(43) Date of publication of application:
**06.03.91 Bulletin 91/10**

(84) Designated Contracting States:
**DE FR GB IT**

(71) Applicant: **Litton Systems, Inc.**
**360 North Crescent Drive**
**Beverly Hills California 90210-9990(US)**

(72) Inventor: **Seebode, Harry R.**
**22144 Napa Street**
**West Hills, CA 91304, California(US)**

(74) Representative: **Godsill, John Kenneth et al**
**Haseltine Lake & Co. Hazlitt House 28**
**Southampton Buildings Chancery Lane**
**London WC2A 1AT(GB)**

(54) **Computer system.**

(57) A computer system (10) configured particularly for operation of real time tasks (30) includes an executive scheduling function (2) for scheduling tasks in accordance with predetermined priorities and categories. Asynchronous I/O interrupts are prohibited as well as task execution exceeding a predetermined worst case execution time. Attempts to access unauthorised memory or I/O addresses terminates execution of the task and returns operation to the next most critical task.

FIG 1

## COMPUTER SYSTEM

The present invention is related to computer systems, and in particular to computer systems which process real time tasks e.g. subroutines including process, industrial and robotic control applications. The present invention has applications in the field of real time monitoring and control of aircraft and instruments, for example for airborne navigation.

Conventional computer systems for real time processing applications require relatively complex computer systems structured from multi-card computers supported by multi-card input and output subsystems. The advent of smaller computer hardware systems, including smaller, but more powerful, single chip computers has made real time computer applications more practical and attractive, but more and more complex to design and test.

Real time computer applications operate in many areas in which failure of operation cannot be tolerated, such as the operation of aircraft. This requires system designs which are trouble free and failsafe. However, as the computer central processing units, or CPU's, become more sophisticated, the difficulty in the development task to control, verify and monitor such applications as they are being developed has greatly increased.

Conventional memory management tools, useful for non real-time applications, are not practical or convenient for use in real time applications. Conventional memory management approaches often consume too much real time overhead and don't usually provide sufficient time resolution for the myriad small size real time tasks often required in typical real time computer applications.

Designers and manufacturers of real time systems have been confronted with the difficulties of verifying the integrity of software during development even though the operation of the software may include an almost infinite number of asynchronous events that can combine in any number of ways which could cause system failure. The conventional solution to these development problems is to add additional expensive hardware and higher order programming languages to modify non-real time computer systems for real time tasks and applications. This approach has met with limited success.

Certain embodiment of the present invention may be so designed as to adress the preceding and other shortcomings of the prior art. According to a first aspect of the invention, there is provided a method for operating a computer system to perform real time tasks by invoking an executive scheduling function when a real time interrupt is received to schedule such tasks during time interval ticks sufficient to support all such real time tasks. These tasks are scheduled in accordance with a predetermined categorization of each task based on the ability of that task to tolerate interruption. Access by each task to memory addresses outside a predetermined contiguous address space authorized for that task is selectively prohibited.

In another aspect, the invention provides apparatus for performing real time computer tasks. Means, responsive to real time interrupts, are provided for scheduling the tasks during time interval ticks sufficient to support all such tasks in accordance with a predetermined categorization of each task based on the ability of that task to tolerate interruption. Means are provided for selectively prohibiting access by each task to memory addresses outside a predetermined contiguous address space authorized for each such task. Means may also be provided for terminating any task upon detection of an attempt by that task to access memory addresses outside the predetermined contiguous address space authorized for that task.

For a better understanding of the present invention and as to how the same may be carried into effect, reference will now be made by way of example to the accompanying drawing in which:

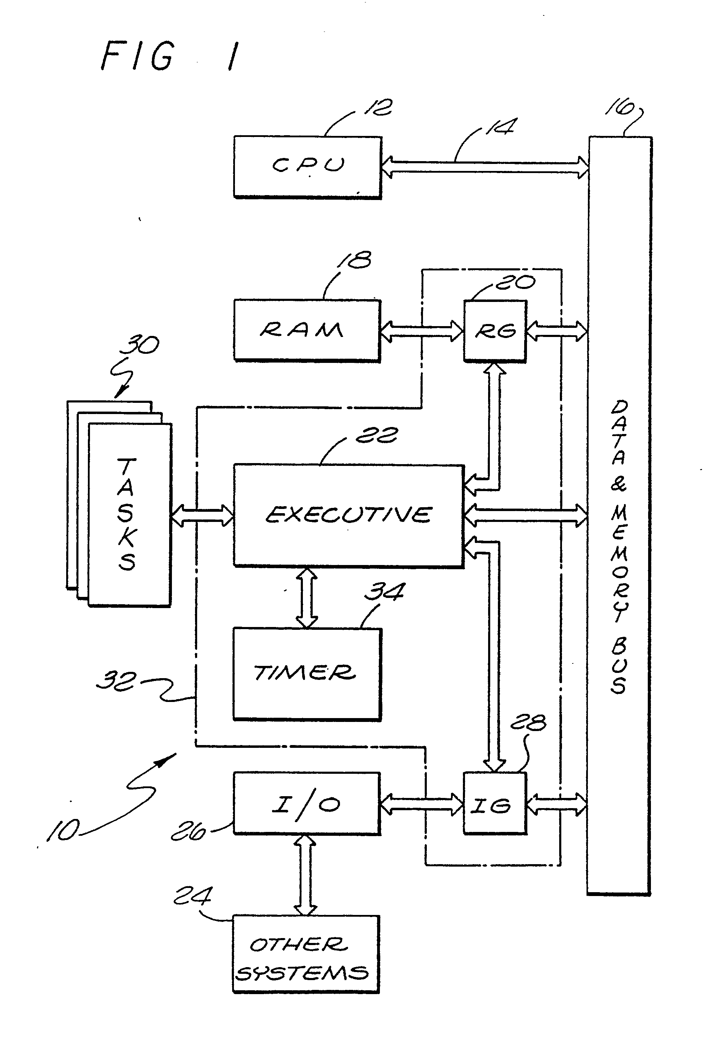

Fig. 1 is a block diagram outline of the basic component structures required in a real time computer system.

The operation of modern computers is controlled by a combination of hardware and software. Computer systems may be configured to operate in the same manner by very different combinations of hardware and software. The particular combinations used may be dictated by many variables, beyond the scope of the present discussion. The preferred embodiment of the present invention described herein may therefore be configured from many differing combinations of hardware and software without departing from the spirit and scope of the invention.

Fig. 1 is a block diagram outline of the basic component structures required in real time computer system 10 . Real time computer system 10 may be a stand alone system configured from a few electronic chips or may be a small sub part of a larger computer system, not shown, which is configured for real-time applications or a combination of real and non-real time applications.

Real time computer system 10 includes CPU 12 connected via interconnect 14 to data & memory bus 16. Interconnect 14 is shown with arrow heads pointing in both directions to indicate that data may flow in both directions between CPU 12 and data & memory bus 16. CPU 12 operates as a specifically configured system in accordance with instructions received via data & memory bus 16 from system memory shown in Fig. 1 as RAM 18.

RAM 18 may actually be configured from some combination of Random Access Memory, Programmed Read Only Memory and/or fixed memory such as tape or diskette memory, but is shown here for convenience as a single entity. RAM 18 communicates with data & memory bus 16 via RAM gate 20, the operation of which will be described below in greater detail with regard to EXECUTIVE 22.

CPU 12 may also receive data and instructions from other sources outside real time computer system 10, identified herein for convenience as a group as Other Systems 24. Other Systems 24 may include other memory sources, other computer systems or any other source or combination of sources of data and instructions applied to real time computer system 10 such as sensors and motor controllers, not shown. All such devices outside of real time computer system 10, including display devices such as consoles, keyboards printers and the like, communicate with real time computer system 10 via an Input & Output Subsystem, shown herein for convenience as I/O 26.

I/O 26 communicates through data & memory bus 16 to CPU 12 and RAM 18 via I/O gate 28 described in greater detail below with regard to EXECUTIVE 22.

With the exception of EXECUTIVE 22 and gates 20 and 28, the computer system described above is the heart of a convention computer system and which would, of course, include many other components and subsystems of hardware, software and combinations of both. when real time tasks, shown as tasks 30, are applied to such a conventional computer system, the development, operation and integrity of the execution of such tasks is greatly enhanced by the addition of real time subsystem 32 embodying the present invention.

Real time subsystem 32, including EXECUTIVE 22, gates 20 and 28 and timer 34 described below, may most conveniently be configured from a combination of hardware and software. For the purposes of the discussions herein, only their functions need be described to permit a person of ordinary skill in the art of real time computer systems design to design and construct a computer system embodying the present invention.

Real time tasks 30 are typically in the form of subroutines or partitions of other programs. Tasks 30 may include many small tasks such as the monitoring of temperature or pressure sensors or longer and more complex tasks such as correcting the heading of an aircraft in accordance with received or calculated radio navigation information.

As shown in Fig. 1, real time subsystem 32 serves to connect most if not all real time tasks 30 with the other subcomponents of real time computer system 10, including CPU 12 and RAM 18. Real time subsystem 32 may be called into operation by any real time interrupt.

Interrupts are conventional instruction forms used to indicate that some task or subsystem requires the attention of CPU 12. A typical real time interrupt might be a request from an altitude subsystem to compare current measured altitude data with the desired calculated data.

EXECUTIVE 22 is called by the real time interrupt and serves to schedule all tasks 30 to be started or completed during each specific real time interval or tick. The duration of each tick, that is, the interval during which the operation of real time tasks are directly controlled and monitored by CPU 12, must support the shortest time interval required by tasks 30. Each task 30 should therefore carry with it its time duration requirements.

For example, if tasks to be performed in various ticks require operations at 1000, 100 and 10 times per second, the real time intervals must occur, and therefore EXECUTIVE 22 must operate, at a minimum rate of 1000 tasks, or ticks, per second. In addition to such time critical tasks, EXECUTIVE 22 can also handle real time tasks whose time of execution is not critical. Such non-time critical tasks may be call ASAP tasks.

Although in practical applications, tasks to be performed during the same interval or tick may have overlapping time, memory and I/O requirements, EXECUTIVE 22 treats all such tasks in any tick as if they had unique requirements for such internal computer assets. This approach dictates that EXECUTIVE 22 schedule such tasks in a clearly specified order for execution.

In order to create the proper order, each task must carry with it prioritization information. Although many priority systems may be used, it is convenient to prioritize tasks as Critical, Essential or Non Essential. Critical tasks will be scheduled first, followed by Essential tasks and then Non-Essential tasks will scheduled, if additional time remains within the tick.

This prioritization system also dictates the fall back consequences of a failure in a task. Failure in an Essential task, for example, cannot be permitted to contaminate operation of a Critical task. Similarly, failures in Non-Essential tasks cannot be permitted to contaminate Essential or Critical tasks. This protection must be provided by EXECUTIVE 22 because, in most instances, there is little protection available from CPU 12.

This burden to prevent contamination of a higher priority task may be met in part by configuring EXECUTIVE 22 to require each task to individually initialize all computer assets. Asset initialization by each task 30 avoids failures even if prior task operation has contaminated computer assets. The operation of gates 20 and 28 as discussed below also serves to control and limit this failure mode.

Those tasks 30 which by their nature may be completed before next real time interrupt, may be handled directly by EXECUTIVE 22 and need only be prevented from contaminating assets used by other tasks. This protection is provided by gates 20 and 28 as discussed herein below.

Tasks 30 which by their nature may not be completed before the occurrence of the next real time interrupt must be further classified before being handled EXECUTIVE 22.

Such tasks may conveniently be categorized according to their ability to accept interruption. A particularly useful system is to categorize tasks which may not be completed before the next real time interrupt as NIRTT, IRTT or IBGT as explained below.

Non Interruptible Real Time or NIRTT tasks will include all highest rate tasks and may include as many additional tasks as possible which can all ways be executed before the next real time interrupt. Interruptible Real Time or IRTT tasks are tasks which should be scheduled for execution after NIRTT tasks and all prior scheduled IRTT tasks. Interruptible Background or IBGT tasks are scheduled for execution after all NIRTT and IRTT tasks have been completed and therefore may never be executed.

The following example may serve to illustrate the scheduling of various categories of tasks. For this example, a series of tasks 30 scheduled for execution during two consecutive ticks, identified as Tick #1 and Tick #2, are shown below together with their categories and durations.

| Tick #1 Tasks | | Tick #2 Tasks | |
|---|---|---|---|
| 1A. NIRRT | 600 $\mu$s | 2A. NIRRT | 500 $\mu$s |
| 1B. IRRT | 700 $\mu$s | 2B. IRRT | 100 $\mu$s |
| 1C. IBG | 900 $\mu$s | 2c. IBG | 0 $\mu$s |
| Total Scheduled | $\overline{2200\ \mu s}$ | Total Scheduled | $\overline{900\ \mu s}$ |

The execution sequence of tasks 30 as specified in this example would be as follows:

| 1. | 1A. NIRRT | 600 $\mu$s |
|---|---|---|
| 2. | 1B. IRTT | 400 $\mu$s (partial) |
| 3. | 2A. NIRRT | 500 $\mu$s |
| 4. | 1B. IRTT | 300 $\mu$s (remainder) |
| 5. | 2B. IRTT | 100 $\mu$s |
| 6. | 1C. IBG | 100 $\mu$s (partial) 800 $\mu$s left over. |

Proper operation of real time subsystem 32 requires that Other Systems 24 be prevented from submitting asynchronous interrupts to real time subsystem 32. Asynchronous interface with other systems make operation and scheduling of real time tasks by EXECUTIVE 22 difficult to test, verify and monitor. For example, eight asynchronous inputs permitted between Other Systems 24 and I/O 26 would yield 64 possible sequences of real time tasks at any instant during any tick. Therefore real time subsystem 32 and or I/O 26 is configured to accept only synchronous inputs.

Real time subsystem 32 also preferably includes Execution timer 34 which monitors the execution of each task 30. Successful completion of each task 30 generates an interrupt to EXECUTIVE 22 to indicate that the next Critical task scheduled should be handled. Successful completion would generate an interrupt by Execution timer 34 to EXECUTIVE 22.

Each task must therefore provide information concerning its worst case, longest execution time and such information must not be accessible for alteration by the task it describes. A convenient example would be to place the worst case execution time information for each task in read only memory.

Each task 30 may use memory or I/O addresses. To enhance the ease of development and test of real time subsystem 32, each task 30 is required to use contiguous memory locations in RAM 18 and specified I/O addresses in I/O 26.

RAM gate 20 operates to prevent any task 30 from accessing memory in RAM 18 outside of the contiguous memory locations authorized for such task. This may conveniently be accomplished by used of a high/low or comparison technique. In this implementation each task 30 carries with it an identification of a range of authorized memory addresses in RAM 18. RAM gate 20 permits connection only to addresses within the limits of the authorized range. Such protection is enhanced by carefully controlling memory usage for each task 30 by, for example, utilizing dedicated scratch pads in memory in RAM 18 for each such task.

I/O gate 28 serves the same general function as RAM gate 20 of controlling access by any particular task to I/O 26. The restriction in the design of the computer system to the use of contiguous I/O addresses is not normally practical, but the number of different I/O locations is substantially smaller than the number of available memory addresses or locations in RAM 18.

Rather than the comparison technique described above for use by RAM gate 20, I/O gate 28 may conveniently operate to control unauthorized access to I/O areas by means of a control word. Each task may therefore provide a control word which effectively includes a list of I/O areas authorized for that task.

As discussed above, gates 20 and 28 and timer 34 serve to detect possible failure modes in the operation and execution of individual tasks. A failure mode may be detected by RAM gate 20 detecting an attempt to access memory outside of the contiguous authorized memory access area, or by I/O gate 28 detecting an attempt to access an I/O address not authorized by the appropriate I/O control word, or if the execution time of a particular task exceeds the permitted worst case execution time monitored by timer 34. When such a failure mode is detected the operation of that task must be terminated by EXECUTIVE 22 and control passed to the next appropriate Critical task.

While this invention has been described with reference to its presently preferred embodiment, its scope is not limited thereto and includes all equivalents thereof.

**Claims**

1. A method for operating a computer system to perform real time tasks (30), comprising the steps of:
invoking an executive scheduling function (22) upon receipt of a real time interrupt;
scheduling real time tasks (30) during time interval ticks sufficient to support all such real time tasks;
scheduling real time tasks in accordance with a predetermined categorisation of each task based on the ability of that task to tolerate interruption; and
selectively prohibiting access by each task to memory addresses outside a predetermined contiguous address space authorised for each such task.

2. A method as defined in Claim 1, wherein the real time tasks are scheduled in accordance with a predetermined prioritization.

3. A method as defined in Claim 1 or 3, wherein required internal computer assets are individually initialised for each task as scheduled.

4. A method as defined in Claim 1, 2 or 3, wherein only synchronous I/O interrupts are accepted.

5. A method as defined Claim 1, 2, 3 or 4, wherein the execution time of each real time task is monitored in accordance with a predetermined worst case execution time for that task.

6. A method as defined in Claim 5, wherein any task is terminated upon the detection of execution time exceeding the predetermined worst case execution time specified for that task.

7. A method as defined in any one of Claims 1 to 6, wherein access by each scheduled task is prohibited to I/O buffer addresses except those specifically authorised for each such task.

8. A method as defined in Claim 7, wherein any task is terminated upon the detection of an attempt by that task to access unauthorised I/O buffer addresses.

9. A method as defined in any one of Claims 1 to 9, wherein any task is terminated upon the detection of any attempt by that task to access memory addresses outside the predetermined contiguous address space authorised for that task.

10. Apparatus (10) for performing real time computer tasks (30), comprising, in combination:
means (22) responsive to real time interrupts for scheduling real time tasks (30) during time interval ticks sufficient to support all such real time tasks (30) in accordance with a predetermined categorisation of each task based on the ability of that task to tolerate interruption; and
means (20) for selectively prohibiting access by each task to memory addresses outside a predetermined contiguous address space authorised for each such task.

11. Apparatus as defined in Claim 10 further including:
means (22) for terminating any task (30) upon detection of an attempt by that task to acess memory addresses outside the predetermined contiguous address space authorised for that task.

12. Apparatus as defined in Claim 10 or 11, wherein the real time tasks are scheduled in accordance with a

EP 0 415 515 A2

predetermined prioritisation.

13. Apparatus as defined in Claim 10, 11 or 12 further including:

means (22) for individually initialising required internal computer assets for each tasks as scheduled.

14. Apparatus as defined in Claim 10, 11, 12 or 13, wherein only synchronous I/O interrupts are accepted.

15. Apparatus as defined in anyone of Claims 10 to 14 further including:

means (22) for terminating the execution of each real time task when the execution time for that task exceeds a predetermined worst case execution time.

16. Apparatus as defined in any one of Claims 10 to 15 further including:

means (28) for denying access by each scheduled task to I/O buffer addresses except those specifically authorised for each such task.

17. Apparatus as defined in any one of Claims 10 to 16 further including:

means (22) for terminating the execution of each real time task upon detection of an attempt by that task to access unauthorised I/O buffer addresses.

6

# FIG 1